# EUROPEAN PATENT APPLICATION

(11) **EP 4 741 571 A2**
(43) Date of publication of application: **13.05.2026**
(21) Application number: 26158748.9
(22) Date of filing: 24.02.2023
(51) Int. Cl.: D21H 27/10

(54) **COMPOSITE AND STRUCTURE, METHODS FOR MANUFACTURING THE SAME AND USES THEREOF**

(30) Priority: 25.02.2022 FI 20225172
(62) Divisional of application: 23710922.8
(71) Applicant: Spinnova Oyj, 40320 Jyväskylä (FI)
(72) Inventor: SALMELA, Juha, 40320 Jyväskylä (FI)
(74) Representative: Berggren Oy

(57) **Abstract**

Described herein is composite structure comprising microfibrillated cellulose (MFC) monofilament permeated by a hydrophobic resin. Also described herein are a structure and methods of manufacturing the composite material and structure and the uses thereof.

## Description

### Technical field

The present invention relates to a method of manufacturing composites and structures. Further, the invention relates to composites and structures obtainable by said methods, as well as uses of said composites and structures.

### Background

There exists a variety of different fiber-based reinforcements for a polymer matrix in composite materials. In such reinforcements, fibers of glass, carbon, aramid or basalt have traditionally been used. In recent years, the application of recyclable natural cellulosic fibers such as long fibers of hemp, flax, kanaf, cotton, jute, sisal and coconut and shorter plant fibers, mainly derived from wood pulp, has also received increasing attention due to increasing environmental consciousness.

The type of the reinforcement fiber is one of the most contributory factors impacting on performance of the composite material. For instance, carbon fiber reinforcements are commonly used in the composites wherever high strength-to-weight ratio and stiffness are required. One drawback of carbon fiber material is its environmental impact; it is notoriously difficult to recycle, energy-intensive to produce and it does not biodegrade, for instance. In recent years, microfibrillated cellulose (MFC) has been gaining more and more attention as a reinforcement material due to MFC's potentiality to provide high strength-to-weight ratio reinforcement for composites in environmentally friendly manner.

However, there are various challenges related to the known solutions that utilize MFC in the context of composite materials. For instance, high volume fraction of the cellulose microfibrils within the polymer matrix that is necessary to produce a stiff and strength composite, remains challenging and energy-intensive to achieve.

Consequently, there exists a demand for improved MFC reinforced composites and laminate structures, and simple methods for manufacturing said composites and laminate structures.

### Summary

The aim of the present invention is to at least alleviate one or more of the above drawbacks or challenges associated with the existing solutions of MFC reinforced composites and laminate structures and relating manufacturing methods.

The aims of the invention are obtained with composites and structures, methods for manufacturing said composite and structure, and uses thereof, which are characterized in what is presented in the independent claims. Some advantageous embodiments of the invention are presented in the dependent claims.

### Detailed description

According to an aspect the invention there is provided a composite comprising one or more of microfibrillated cellulose (MFC) monofilaments, yarns made up of such monofilaments, a nonwoven fabric made up of such monofilaments and fabric made up of yarn comprising MFC fibers in form of monofilaments being permeated by a hydrophobic resin.

According to a one embodiment of the present invention there is provided a composite comprising a fabric (i.e., a cloth) made up of yarn comprising microfibrillated cellulose (MFC) fibers. The fabric being permeated by a hydrophobic resin encapsulating at least one of two opposing surfaces of the fabric. The yarns of the fabric may comprise spun cellulose monofilaments having an elongate internal structure comprising interlocked MFC fibers. This embodiment can be combined with the other embodiments here described.

Terms "permeate(d)" and "impregnate(d)" are used here interchangeably, both meaning that the resin penetrates into (and through) the reinforcing material. Said reinforcing material may comprise monofilaments of microfibrillated non-regenerated cellulose as such or formed into a yarn or fabric and optionally other fibrous material including man-made cellulosic materials.

The term "monofilament" as used herein refers to a continuous length of individual microfibrillated cellulose fibrils grouped and extending generally along the longitudinal dimension of the cellulose monofilament. The fibrils interact chemically and/or mechanically in order to form a permanent monofilament structure (in other words, fibrils of the monofilament are interlocked). The monofilament cannot be opened or disassembled. Disintegration of fibrous monofilament yields only individual fibrils. The fibrous monofilament may comprise continuous length of several meters or kilometers. Individual fibrils of the fibrous monofilament are mainly oriented along length of the fibrous monofilament. A monofilament as used here is a single strand filament produced by extruding and then drying a suspension.

The monofilament as used in this context comprises at least 50 wt.-% of non-regenerated microfibrillar cellulose (MFC), a dispersing agent, such as CMC, and optionally strength additives, hydrophobic adhesives, sizing agents, crosslinking agents, pigment(s), and/or other modifier(s). In one embodiment the monofilament comprises 80 to 98 wt.-% non-regenerated microfibrillated cellulose (MFC); 2 to 20 wt.-% dispersion agent(s), such as CMC, and possible strength additives, hydrophobic adhesives, sizing agents, crosslinking agents, pigment(s), and/or other modifier(s). The weight percentages are calculated from the total weight of the monofilament.

A method of manufacturing a fibrous monofilament comprises forming an aqueous suspension comprising from 90 to 96 wt.-% of water, and from 4 to 10 wt.-% of dry matter including non-regenerated microfibrillar cellulose (MFC), dispersing agent, at least one of the following: a natural wax, a thermoplast, a sizing agent, natural rubber as water-based emulsion/dispersion; and a crosslinking agent, the dry matter comprising at least 50 wt.-% of non-regenerated MFC. The method further comprises extruding the suspension into a monofilament and drying the monofilament.

Term "fabric" as used herein refers to any woven or nonwoven material formed from fibrous monofilament (i.e., wherein monofilament is at least one component of the fabric). Nonwoven fabrics are broadly defined as sheet or web structures formed from staple fiber (short) and long fiber (continuous, long), bonded together mechanical, thermal, or chemical treatment. Staple monofilaments can be used e.g. for nonwoven or for spun yarn. Woven fabrics are textiles formed by weaving or knitting either using a bundle of continuous monofilaments or yarn formed of monofilaments (staple or continuous).

In one embodiment a woven or nonwoven fabric in permeated (impregnated) with a hydrophobic resin. When the fabric, yarn or MFC monofilament is impregnated with a hydrophobic resin to form mutually a composite, MFC monofilaments ensure good stress transfer throughout the composite so providing the composite with the desired stiffness, strength, large impact energy absorption and toughness properties.

It has surprisingly been found that also MFC monofilament as a reinforcing material provide several good properties to the composite with a hydrophobic resin. The monofilaments may be parallel to each other or at least partially crossing each other. Resin encapsulates the filaments and penetrates through the whole reinforcing structure. In one embodiment the microfibrillated cellulose (MFC) monofilaments are permeated (impregnated) with hydrophobic resin. Monofilaments allow forming a uniform quality reinforcement structure and provide a good effect of vibration reduction. In addition, use of monofilaments, optionally with other fibrous material, removes the step of forming a yarn or fabric.

The composite may be in form of a layer, film or sheet comprising a first surface and a second surface opposing the first surface. The thickness of the material may vary depending on the application. It may also have another form, such as a tube.

The hydrophobic resin comprises an epoxy such Bisphenol-A or modified Bisphenol A epoxy. Alternatively, or additionally, the hydrophobic resin comprises a resin selected from the group comprising siloxanes, polyurethanes, phenolic resins, polyesters and acrylics.

Preferably the yarns of the fabric each comprises spun cellulose monofilaments having an elongate internal structure comprising interlocked MFC fibers, and optional man-made cellulosic fibers, and extending generally along the longitudinal dimension of the cellulose monofilament. Preferably, the MFC fibers of the fabric comprise plant based natural, non-regenerated MFC fibers, in form of monofilaments.

Alternatively, the cellulose fibers of the fabric comprise a mixture of non-regenerated and regenerated, man-made cellulose fibers. The regenerated cellulose fibers may be used to improve tensile strength and stretch of the fibrous monofilament. The regenerated (i.e., man-made) cellulose fibers mixed with the other fibers forming the monofilament of the yarn may hence be used to tailor further mechanical properties of the composite. These regenerated cellulose fibers may be man-made cellulosic fibers (for example Lyocell, viscose or modal). Non-regenerated MCF may be in form of monofilaments.

The fabric may comprise mixture of MFC fibers, preferably in form of monofilaments, and man-made cellulosic fibers. The fabric may comprise at least 40 wt.% MFC fibers, preferably in form of monofilaments, and at least 20 wt.% man-made cellulosic fibers. Alternatively, the fabric may comprise at least 50 wt.% MFC fibers, preferably in form of monofilaments, and at least 30 wt.% man-made cellulosic fibers. Alternatively, the fabric may comprise at least 55 wt.% MFC fibers, preferably in form of monofilaments, and at least 35 wt.% man-made cellulosic fibers.

Alternatively, the fabric may comprise between 50 and 60 wt.% of MFC fibers, preferably in form of monofilaments, and between 30 and 40 wt.% of man-made cellulosic fibers.

Alternatively, the fabric may comprise between 55 and 70 wt.% of MFC fibers, preferably in form of monofilaments, and between 30 and 45 wt.% of man-made cellulosic fibers.

Man-made cellulosic fibers may be selected from Lyocell, viscose, modal, acetate, rayon and recycled textile waste fibers or any mixture thereof. Man-made cellulosic fibers may be Lyocell fibers. Preferably the fabric may comprise at least 40 wt.% MFC fibers preferably in form of monofilaments, and at least 20 wt.% Lyocell fibers. Alternatively, the fabric may comprise at least 50 wt.% MFC fibers preferably in form of monofilaments, and at least 30 wt.% Lyocell fibers. Alternatively, the fabric may comprise between 50 and 60 wt.% wt.% of MFC fibers, preferably in form of monofilaments, and between 30 and 40 wt.% of Lyocell fibers.

It is possible to include also other wood-based fibers or other short natural cellulose fibers like cotton, flax, hemp, jute or coconut fiber. Naturally, also glass or carbon fiber reinforcement can be used in combination with the present disclosure, in such embodiment it is possible to reduce the share of glass fiber, which cannot easily be recycled or burnt to energy.

Natural and biodegradable fibers together with monofilaments are environmentally friendly, especially in combination with biodegradable resin. The composite or structure may be biodegradable.

Alternatively, the fabric may comprise between 55 and 70 wt.% wt.% of MFC fibers, preferably in form of monofilaments, and between 30 and 45 wt.% of Lyocell fibers.

A majority (i.e., at least 50 wt.%) of the cellulose monofilaments of the yarns of the fabric have a cross-sectional aspect ratio in a range of 30-300 ×10-6 m / 5-30 ×10-6 m or in a range of 30-200 ×10-6 m / 5-20 ×10-6 m or in a range of 30-120 ×10-6 m / 5-10 ×10-6 m.

The fabric may consist of one or more portions. A plurality of portions may be similar and/or dissimilar with each other, depending on the application.

The fabric may have a portion whose cellulose monofilaments are oriented substantially parallel to one another along their length.

The fabric may have a portion where the cellulose monofilaments being formed into a woven or knitted fabric.

The fabric may have a portion where the cellulose monofilaments being formed into a non-woven fabric.

The whole fabric may have cellulose monofilaments being formed into a woven or knitted fabric or cellulose monofilaments being formed into a non-woven fabric.

The fabric may be formed from yarns having a linear density in a range of 10-100 tex or in a range of 20-30 tex or in a range of 30-40 tex.

The fabric may a weight in a range of 10-500 g/m² or in a range 50-350 g/m² or in a range 100-300 g/m².

Alternatively, the fabric has a weight that is at least 200 g/m².

The fibrous monofilaments of the portion of the woven fabric and/or the non-woven fabric may be staple fibers having an average length in a range of 3-160 mm or in a range of 10-80 mm or in a range of 30-60 mm.

The cellulose monofilaments have a linear density in a range of 1-10 dtex or in a range of 2-8 dtex or in a range of 3-5 dtex.

The content of fibrous monofilaments (MFC fiber content) of the fabric is at least 50 wt.%.

The fabric has a generally average density in a range approximately 1000 kg/m³ to approximately 1600 kg/m³ or in a range approximately 1100 kg/m³ to approximately 1500 kg/m³ or in a range approximately 1150 kg/m³ to approximately 1400 kg/m³ or in a range approximately 1200 kg/m³ to approximately 1300 kg/m³.

According to an aspect of the present invention there is provided a structure comprising at least one layer, wherein the layer comprises a composite structure according to any of the preceding claims. One layer may be sufficient depending on the reinforcing material (e.g. weight of the fabric or number of monofilaments) and the desired properties.

According to an aspect of the present invention there is provided a laminate structure comprising two or more layers wherein at least one of the two layers comprise a composite structure according to first aspect of the present invention.

According to an aspect of the present invention there is provided a method for manufacturing a composite. The method comprises a step of applying hydrophobic resin to a fabric made up of yarn comprising MFC fibers to incorporate the resin into a network of MFC fibers of the fabric.

According to an aspect of the present invention there is provided a method of manufacturing a structure. Said the method comprises:
a) applying hydrophobic resin to microfibrillated cellulose (MFC) monofilaments, or yarns made up of such monofilaments, or a nonwoven fabric made up of such monofilaments or fabric made up of yarn comprising MFC fibers in form of monofilaments to incorporate the resin with said fibrous microfibrillated cellulose (MFC) monofilaments, or yarns made up of such monofilaments, or a nonwoven fabric made up of such monofilaments or fabric made up of yarn comprising MFC fibers in form of monofilaments for forming a first layer
b) applying on top of the first layer formed in step (a) fibrous microfibrillated cellulose (MFC) monofilaments, or yarns made up of such monofilaments, or a nonwoven fabric made up of such monofilaments or fabric made up of yarn comprising MFC fibers in form of monofilaments; and
c) applying hydrophobic resin on top of the layer formed in step b) to incorporate the resin into fibrous microfibrillated cellulose (MFC) monofilaments, or yarns made up of such monofilaments, or a nonwoven fabric made up of such monofilaments or fabric made up of yarn comprising MFC fibers in form of monofilaments applied in step b) for forming a second layer,
wherein steps b) and c) are optionally repeated until the structure is of the desired weight and/or thickness.

According to an embodiment the method of manufacturing a structure comprises:
a) hydrophobic resin is applied to a fabric made up of yarn comprising MFC fibers to incorporate the resin with a network of MFC fibers of the fabric;
b) another fabric made up of yarn comprising MFC fibers is applied on top of the layer formed in step a); and
c) hydrophobic resin is applied on top of the layer formed in step b) to incorporate the resin with a network of MFC fibers of the fabric applied in step b),
wherein steps b) and c) are optionally repeated until the laminated structure is of the desired weight and/or thickness.

The method for manufacturing a composite or a laminate structure may further comprise a step of pressing the formed layer(s).

The method for manufacturing a composite or a laminate structure may further comprise a step of curing the formed layer(s).

The fabric used in the manufacturing of composite or a laminate structure may be a such as described above.

According to an aspect of the present invention there is provided a use of the composite described here or the composite manufactured as described here as a sports equipment, construction, decorative, packing or transport material.

According to an aspect of the present invention there is provided use of the structure described here or the structure manufactured as described here as a sports equipment, construction, decorative, packing or transport material.

### Description of Preferred Embodiments

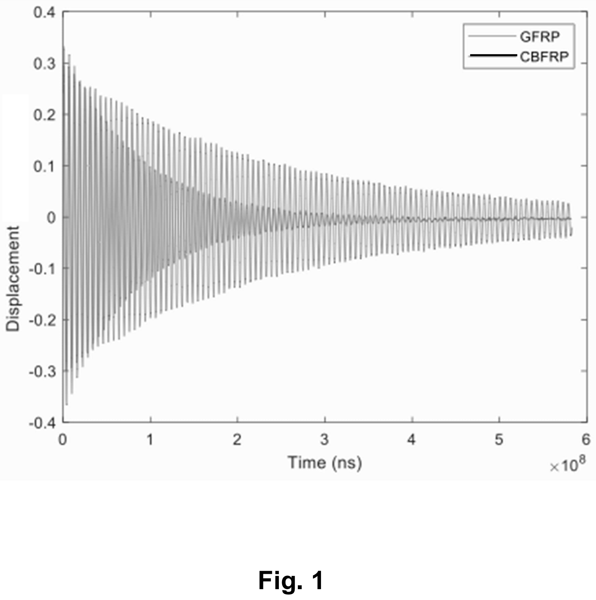

Hereinafter, an embodiment of the present invention will be described in detail. Reference is made to the following drawing in which Figure 1 is a graph that shows the damping performance of a glass fiber laminate structure (GFR laminate/reference) and an embodiment of MFC laminate structure of the invention.

As briefly discussed above, the present invention generally achieves novel composite and laminate structure comprising MFC fibers, preferably in form of monofilament, with combination of properties selected from strength, fatigue resistance, damping resistance, mechanical stability, strength-to-weight ratio, and recyclability.

The microfibrillated cellulose (MFC), a.k.a. microfibrous cellulose, in the present invention is a cellulose fiber or an elongated element having a far smaller width than a pulp fiber that is used for ordinary paper-manufacturing. The MFC is a collection of cellulose molecules in a crystal state, and the crystal structure thereof is the I-type, i.e., parallel chain. The width of the MFC is preferably between approximately 2 nm to approximately 1000 nm, more preferably 2 nm to 500 nm, and still more preferably 4 nm to 100 nm under suitable microscopic observation. When the width of the fiber is less than 2 nm, the cellulose is dissolved in water in a molecular form, and therefore, it becomes difficult for the cellulose to exhibit the favorable properties of an elementary fibril or microfiber such as strength or rigidity or dimensional stability, for instance. Said favorable properties cannot be obtained either when the width of the fiber exceeds 1000 nm in which case such a fiber is simply an element included in ordinary pulp.

In the present disclosure a "fiber" refers to elongated fibrous filaments and staple fibers. Fibers including natural cellulose fibrils refer to fibers including plurality of natural cellulose fibrils, which are interlocked together through hydrogen bonds and exhibit crystalline structure of cellulose I. Cellulose fibrils originate from refined pulp or other plant-based material. Monofilaments are a species of elongated fibrous filaments.

In the present disclosure a "man-made cellulosic fiber" refers to fiber which is regenerated. Crystalline structure of such a kind of fiber is mainly other than cellulose I. Conversion of cellulose I to cellulose II (or other forms, like cellulose III or cellulose IV) is irreversible. Thus, these forms are stable and cannot be converted back to cellulose I.

In the present disclosure a "natural cellulose fibril" i.e., fibrous element of natural cellulose has not undergone chemical or physical modification of its macromolecular structure. Cellulose fibrils in native form refer to natural cellulose fibrils. Natural cellulose fibrils may originate from plant based raw material. Plant based raw material may be wood or non-wood material. The wood material can be based on softwood tree, such as spruce, pine, fir, larch, Douglas-fir or hemlock, or hardwood tree, such as birch, aspen, poplar, alder, eucalyptus or acacia, or any mixture of above. The non-wood material may be based on, such as cotton, hemp, flax, sisal, jute, kenaf, bamboo, peat or coconut. Non-wood based natural cellulose fibrils may also be from agricultural residues, grasses or other plant substances such as straw, leaves, bark, seeds, hulls, flowers, vegetables or fruits. Cellulose that has not undergone chemical or physical modification of its macromolecular structure, so called non-regenerated cellulose in this context is used in form of MCF monofilaments as discussed above.

Natural cellulose fibrils may be wood based. Wood based natural cellulose fibrils may originate from chemical pulp, thermomechanical pulp, mechanical pulp or waste-paper pulp. Wood based natural cellulose fibrils are non-regenerated. Crystalline cellulose structure of non-regenerated natural cellulose fibrils consists of cellulose I, which is native form of cellulose. Natural cellulose fibrils may have gone through mechanical or chemical treatment known in the art to increase firer fibrillation and to separate microfibrils from pulp fibers.

The method for manufacturing MFC is not particularly limited. MFC may be isolated from cellulose fibers through high pressure, high temperature and high velocity impact homogenization, for instance. The homogenization process is used to delaminate or disintegrate the cell walls of the fibers and to liberate their sub-structural fibrils and micro fibrils. Enzymatic and/or mechanical pre-treatments of wood fibers may also be used.

Cellulose fibers may be processed into MFC in a mechanical operation such as crushing. A grinder (an ultra-fine friction grinder or the like), such as a high-pressure homogenizer or ultrahigh-pressure homogenizer, a high-pressure impact grinder, a disc-type refiner, or a conical refiner, may be used.

The cellulose monofilaments comprising non-regenerated MFC fibers may be manufactured as disclosed in patent publications WO 2018/15099 A1, WO 2016/174307 A1, WO 2018/115577 A1 or WO 2013/034814 A1, for instance, or any other method of manufacturing cellulose monofilament comprising MFC fibers and optional man-made cellulose fibers known in the art.

In one embodiment a major part of the cellulose fibers of the fabric are MFC fibers, preferably non-regenerated MFC formed into monofilaments.

In one the MFC fiber content of the fabric is at least 70 wt.%. In another embodiment the MFC fiber content of the fabric is at least 80 wt.%. Still in another embodiment the MFC fiber content of the fabric is at least 90 wt.%.

One advantage of the method is that it enables a simple, energy effective way to manufacture composite which reinforcement may consists mainly of MFC fibers or optionally totally of MFC fibers. MFC fibers may be non-regenerated MFC fibers formed into a monofilament.

Still another advantage of the method is that it may be actuated environmentally friendly manner, for instance, there is no need for organic solvents.

There are various forms of the fabric. Which dimensions and directions of the yarns within the fabric are used depend on the application and use case of the composite. For instance, if the composite is employed in a ski the composite advantageously comprises a portion where the cellulose monofilaments of the yarns of the fabric are oriented substantially parallel to one another along their length. It will be apparent to those skilled in the art that the fabric can be employed into a desired form, including variables how many layers and directions of the monofilaments in the layer there are employed, to obtain a performance to the product comprising the composite or structure that is desired. Also parallel monofilaments are usable in most applications.

Generally, in this disclosure a "portion" of the fabric refers an area or a through cut area of the fabric. Furthermore, the portion may cover in a certain use cases or applications the whole fabric. Alternatively, the whole fabric may comprise a plural of different portions so that there can be mutually similar or dissimilar portions in the fabric, depending on the application.

In an embodiment, the fabric has a portion where the cellulose monofilaments being formed into a woven or knitted fabric.

In an embodiment, the fabric has a portion where the cellulose monofilaments being formed into a non-woven fabric.

In one embodiment monofilaments are used as such as reinforcing structure.

It will be apparent to those skilled in the art that woven or knitted fabric has varying porosity whereas the porosity of non-woven fabric is generally uniform, and the porosity of the fabric impacts on the incorporation of the hydrophobic resin with the network of MFC fibers of the fabric.

### Manufacturing method of composite material

The composite may be formed in a method comprising applying hydrophobic resin to a microfibrillated cellulose (MFC) monofilaments, or yarns made up of such monofilaments, or a nonwoven fabric made up of such monofilaments or fabric made up of yarn comprising MFC fibers in form of monofilaments to incorporate the resin with said microfibrillated cellulose (MFC) monofilaments, or yarns made up of such monofilaments, or a nonwoven fabric made up of such monofilaments or fabric made up of yarn comprising MFC fibers in form of monofilaments.

In one embodiment a composite may be formed in a method comprising the steps of:
a) a monofilament, a yarn comprising such monofilament, or a fabric made up of yarn comprising MFC fibers in form of monofilament, a nonwoven made up from monofilaments and optionally man-made cellulosic fibers, is applied to a surface;
b) hydrophobic resin is applied to the fabric and allowed to incorporate with a network of fibers of the fabric; and
c) the formed layer is cured to form a layer of composite.

The curing step of the method may comprise any suitable drying or curing method described hereinabove and/or known in the art.

The curing temperature may be about 70°C to 130°C, such as 80°C. Drying methods that are generally used for composites, such as hot air drying or infrared heater, can be used to accelerate the curing.

Pressure need not be applied to the formed layer during curing, but it can be advantageous in reducing imperfections in the cured material. One or a plurality of layers can be built up by this method (e.g., fabric/hydrophobic resin/fabríc/ hydrophobic resin) before curing, or alternatively, each material layer comprising the fabric and hydrophobic resin can be cured first before the addition of optional further layers.

The method for applying the hydrophobic resin applying step is not particularly limited, and an ordinary method, such as bar coating, die coating, curtain coating, air knife coating, blade coating, rod coating, Gravure coating, spray coating, size press coating, and gate roll coating, may be used.

In the method the fabric is advantageously disposed on a surface from which the formed composite or laminate structure can be removed. The surface may advantageously be formed of metal or alternatively of any other suitable material known to those skilled in the art. Advantageously the surface comprises a hydrophobic external surface. The removal of the composite or laminate structure may be further improved by applying oil or wax to the surface contacting with the composite or the structure.

A further function of the hydrophobic resin is that it effectively encapsulates the cellulose fiber fragments of the fabric, so rendering the formed composite or laminate structure impermeable to water.

### Manufacturing method of laminate structure

The laminate structure may be formed in a method comprising the steps of:
a) applying hydrophobic resin to microfibrillated cellulose (MFC) monofilaments, or yarns made up of such monofilaments, or a nonwoven fabric made up of such monofilaments or fabric made up of yarn comprising MFC fibers in form of monofilaments to incorporate the resin with said fibrous microfibrillated cellulose (MFC) monofilaments, or yarns made up of such monofilaments, or a nonwoven fabric made up of such monofilaments or fabric made up of yarn comprising MFC fibers in form of monofilaments for forming a first layer
b) applying on top of the first layer formed in step (a) fibrous microfibrillated cellulose (MFC) monofilaments, or yarns made up of such monofilaments, or a nonwoven fabric made up of such monofilaments or fabric made up of yarn comprising MFC fibers in form of monofilaments; and
c) applying hydrophobic resin on top of the layer formed in step b) to incorporate the resin into fibrous microfibrillated cellulose (MFC) monofilaments, or yarns made up of such monofilaments, or a nonwoven fabric made up of such monofilaments or fabric made up of yarn comprising MFC fibers in form of monofilaments applied in step b) for forming a second layer,
wherein steps b) and c) are optionally repeated until the laminated structure is of the desired weight and/or thickness.

In one embodiment a laminate structure may be formed in a method comprising the steps of:
a) a fabric made up of yarn comprising MFC fibers, and optionally man-made cellulosic fibers, is applied to a surface;
b) hydrophobic resin is applied to the fabric and allowed to incorporate with a network of fibers of the fabric;
c) a fabric made up of yarn comprising MFC fibers, and optionally man-made cellulosic fibers, is applied on top of the layer formed in step b);
d) hydrophobic resin is applied to the fabric and allowed to incorporate with a network of fibers of the fabric applied in step c) and allowed to spread and incorporate with a network of fibers of the fabric;
e) steps c) and d) are repeated until the laminated structure is of the desired weight and/or thickness; and
f) optionally, the formed laminate structure is pressed together in a press (e.g., 4 bar) and heated (e.g. 80°C) to cure the resin.

Another surface can be used to sandwich the formed composite or laminate structure to be pressed in a press.

The composite material and laminate structure described above exhibit several unique features over those materials described in the prior art. In the first instance they exhibit damping performance, stiffness and tensile strength parameters that are favorably comparable with any fiber-reinforced composites and laminates known in the art.

Furthermore, the described composite and laminate structure have the significant advantage that it is also impermeable to water so allowing its range of applications to be extensively increased. In particular, the described material may be employed to produce skis, snowboards, surfboards, skateboards, etc., or tubular items such as ski poles, fishing rods, bicycle frames, for instance.

### Examples

### Example 1: Damping performance of a composite

The damping performance of an embodiment of the laminate structure of the invention (MFC laminate, reinforcing material was a woven fabric made up of yarn comprising microfibrillated cellulose (MFC) fibers formed into staple monofilaments) and a corresponding glass-fiber fabric reinforced reference laminate structure (GFR laminate) under forced vibration were measured by a laser- triangulation based displacement sensor (Sick OD2).

The MFC laminate and GFR reference laminate were manufactured as follows:
a) MFC/GFR fabric was applied to a waxed metal surface;
b) Bisphenol-A epoxy was applied to the MFC/GFR fabric and allowed to incorporate with a network of fibers of the fabric;
c) MFC/GFR fabric was applied on top of the layer formed in step b);
d) Bisphenol-A epoxy was applied to the MFC/GFR fabric and allowed to incorporate with a network of fibers of the fabric applied in step c); where steps c) and d) were done twice, resulting a laminate structure consisting of three fabric layers;
e) a waxed metal surface was laid on top of the formed MFC/GFR laminate structure;
f) the metal surfaces sandwiching the formed MFC/GFR laminate structure layer was pressed in a press under pressure of 4 bar and cured at 80 °C for 30 min;
g) the cured MFC/GFR laminate structure was removed from the metal surfaces.

The fabrics incorporated in MFC and GFR laminate structure had fabric weight of 250 g/m². The fabric of MFC laminate structure was weaved from Nm20 weight yarn being ring spun from a mixture of staple fibers having 60 wt.% of MFC fibers and 40 wt.% of Lyocell fibers.

Figure 1 is a graph that shows the damping performance of the GFR reference laminate structure and the MFC laminate structure under forced vibration. The graph shows that the MFC laminate structure (darker line in the figure) have a greater ability to absorb vibration energy, and the effect of vibration reduction is obvious, compared to GFR reference laminate structure. The displacement in Y-axis was measured as volts.

Densities of the MFC monofilament (as such or formed to a yarn or fabric) were measured by weighting the composite and then measuring the volume based on the loss of volume of a composite immersed in water. The density varied between 0.95 and 1.21 tn/m³.

### Example 2:

A composite was formed using continuous fibrous monofilament as enforcing material and unsaturated polyester (UP) as resin and pultrusion method. Analysis were made using conventional methods

| Resin | Meter weight q/m | Flexural modulus GPa | Flexural strength MPa | Tensile modulus GPa | Tensile strength MPa |
|---|---|---|---|---|---|
| UP | 16.6 | 12.7 | 230 | 15.4 | 165 |

It can be seen that the composite is both light and durable.

Some non-limiting embodiments of the invention can be described using the following numbered items:
1. A composite comprising a fabric made up of yarn comprising microfibrillated cellulose (MFC) fibers, the fabric being permeated by a hydrophobic resin encapsulating at least one of two opposing surfaces of the fabric.
2. The composite according to item 1, wherein the hydrophobic resin comprises epoxy or polyurethanes.
3. The composite according to item 1 or 2, wherein the fabric has a weight in a range of 10-500 g/m² or in a range 50-350 g/m² or in a range 100-300 g/m².
4. The composite according to any of the preceding items, wherein the fabric being spun into yarns having a linear density in a range of 10-100 tex or in a range of 20-50 tex or in a range of 30-40 tex.
5. The composite according to any of the preceding items, wherein at least 50 wt.% of the textile consists of MFC fibers.
6. The composite according to any of the preceding items, wherein the fabric comprises at least 40 wt.% MFC fibers and at least 20 wt.% man-made cellulosic fibers or at least 50 wt.% MFC fibers and at least 30 wt.% man-made cellulosic fibers or at least 55 wt.% MFC fibers and at least 35 wt.% man-made cellulosic fibers.
7. The composite according to item 6, wherein the man-made cellulosic fibers are Lyocell fibers.
8. A laminate structure comprising two or more layers wherein at least one of the two layers comprise a composite structure according to any of the preceding items.
9. The laminate structure according to item 8, wherein the structure further comprises one or more layers of a hydrophobic resin disposed between the two or more layers.
10. A method of manufacturing composite, wherein the method comprises a step of applying hydrophobic resin to a fabric made up of yarn comprising MFC fibers to incorporate the resin with a network of MFC fibers of the fabric.
11.A method of manufacturing a laminate structure, wherein the method comprises:
   a) hydrophobic resin is applied to a fabric made up of yarn comprising MFC fibers to incorporate the resin with a network of MFC fibers of the fabric;
   b) another fabric made up of yarn comprising MFC fibers is applied on top of the layer formed in step a); and
   c) hydrophobic resin is applied on top of the layer formed in step b) to incorporate the resin with a network of MFC fibers of the fabric applied in step b),
   wherein steps b) and c) are optionally repeated until the laminated structure is of the desired weight and/or thickness.
12. The method according to item 9 or 10, wherein the method further comprises a step of pressing the formed layer.
13. The method according to item 9 to 10, wherein the method further comprises a step of curing the formed layer.
14. Use of the composite according to any of items 1 to 5 or of the composite manufactured according to item 9 as a sports equipment, construction, decorative, packing or transport material.
15. Use of the laminate structure according to items 8 or 9, or the laminate structure manufactured according to item 10 as a sports equipment, construction, decorative, packing or transport material.

## Claims

1. A composite comprising continuous fibrous monofilaments as reinforcing material and an unsaturated polyester (UP) resin, wherein the composite is obtained by impregnating the reinforcing material with the unsaturated polyester resin using a pultrusion method.

2. The composite of claim 1, wherein the continuous fibrous monofilaments comprise non regenerated microfibrillated cellulose (MFC).

3. The composite of any of the preceding claims, wherein the monofilaments comprise at least 50 wt. % non-regenerated MFC.

4. The composite of any of the preceding claims, wherein the monofilaments comprise 80-98 wt. % non-regenerated MFC and 2-20 wt. % of a dispersing agent, optionally wherein the dispersing agent includes carboxymethyl cellulose (CMC).

5. The composite of any of the preceding claims, wherein a majority of the monofilaments have cross sectional dimensions selected from 30-300 × 10⁻⁶ m / 5-30 × 10⁻⁶ m, 30-200 × 10⁻⁶ m / 5-20 × 10⁻⁶ m, or 30-120 × 10⁻⁶ m / 5-10 × 10⁻⁶ m.

6. The composite of any of the preceding claims, wherein the composite is in the form of a layer, sheet, or tube.

7. A method for manufacturing a composite, comprising:
- providing continuous fibrous monofilament as reinforcing material; and
- impregnating the reinforcing material with unsaturated polyester (UP) resin by a pultrusion method.

8. The method of claim 7, wherein the continuous fibrous monofilaments comprise non regenerated microfibrillated cellulose (MFC).

9. The method of claim 7 or 8, wherein the monofilaments comprise at least 50 wt. % non-regenerated MFC.

10. The method of any of claim 7 to 9, wherein the monofilaments comprise 80-98 wt. % non-regenerated MFC and 2-20 wt. % of a dispersing agent, optionally wherein the dispersing agent includes carboxymethyl cellulose (CMC).

11. The method of any of claim 7 to 10, wherein a majority of the monofilaments have cross sectional dimensions selected from 30-300 × 10⁻⁶ m / 5-30 × 10⁻⁶ m, 30-200 × 10⁻⁶ m / 5-20 × 10⁻⁶ m, or 30-120 × 10⁻⁶ m / 5-10 × 10⁻⁶ m.

12. The method of any of claims 7 to 11, further comprising producing the monofilaments by extruding an aqueous suspension comprising 4-10 wt.% dry matter including non-regenerated microfibrillated cellulose (MFC), a dispersing agent, at least one of the following: a natural wax, a thermoplast, a sizing agent, or natural rubber as a water-based emulsion or dispersion, and a crosslinking agent, from which dry matter at least 50 wt.% is non-regenerated MFC, and 90-96 wt.% water, and drying the extruded monofilament.

13. The method of any of claim 7 to 12, further comprising curing the impregnated monofilaments to form the composite.

14. The method of any of claim 7 to 13, wherein curing is carried out at a temperature of 70-130 °C.

15. The method of any of claim 7 to 14, wherein the composite is formed into a layer, sheet or tubular product.
